# EUROPÄISCHE PATENTANMELDUNG

(11) **EP 1 376 561 A1**
(43) Veröffentlichungstag der Anmeldung: **02.01.2004**
(21) Anmeldenummer: 02013631.3
(22) Anmeldetag: 19.06.2002
(51) Int. Cl.: G11B 7/24, C09J 175/16

(54) **Strahlungshärtbares Klebemittel**

(71) Anmelder: Wellomer GmbH, 67059 Ludwigshafen (DE)
(72) Erfinder: Wellmann, Stefanie, 67159 Friedelsheim (DE)
(74) Vertreter: Riedl, Peter, Dr.

(57) **Zusammenfassung**

Die vorliegende Erfindung betrifft ein strahlungshärtbares Klebemittel, ein Verfahren zur Herstellung einer Klebeverbindung unter Einsatz eines solchen Klebemittels sowie die Verwendung des Klebemittels.

## Beschreibung

Die vorliegende Erfindung betrifft ein strahlungshärtbares Klebemittel, ein Verfahren zur Herstellung einer Klebeverbindung unter Einsatz eines solchen Klebemittels sowie die Verwendung des Klebemittels.

Strahlungshärtbare Klebemittel haben auf Grund ihrer Befähigung zum sehr schnellen Zusammenfügen von Bauteilen in hoher Stückzahl eine breite technische Anwendung gefunden. Sie können ganz allgemein überall dort zum Einsatz kommen, wo mindestens ein für UV-Strahlung durchlässiges Substrat mit einem anderen in einem Klebeverfahren verbunden wird. Geeignete, für UV-Strahlung durchlässige Substrate sind beispielsweise thermoplastische Kunststoffe, wie Polystyrol und Polyvinylchlorid sowie Glas. Sie können beispielsweise mit weiteren UV-durchlässigen oder -undurchlässigen Kunststoffen sowie mit einer Vielzahl weiterer Substrate, wie beispielsweise Metallen oder keramikähnlichen Materialien, wie sie in elektronischen Bauteilen eingesetzt werden, zusammengefügt werden. Typische Einsatzbereiche sind beispielsweise die Medizintechnik, wie etwa das Kleben von Nadeln in Einwegspritzen, sowie die Elektronikindustrie.

Die gestiegenen technischen Anforderungen im Bereich der Beschichtungstechnik mit strahlungshärtbaren Beschichtungsmitteln, beispielsweise zur Herstellung von optischen Informationsträgern (CD, DVD), hat zur Entwicklung neuartiger Strahlungsquellen geführt, die im Wesentlichen reine UV-Strahlung (Wellenlänge etwa 200 bis 400 nm) emittieren. Dabei wurde insbesondere der Anteil an langwelliger Wärmestrahlung (Infrarot-Strahlung/IR-Strahlung) stark verringert. Die bekannten strahlungshärtbaren Klebemittel sind für eine Härtung mit Standard-UV-Lampen ausgelegt, die einen hohen Anteil (bis zu 70 %) an IR-Strahlung emittieren. Es besteht somit ein Bedarf an neuen strahlungshärtbaren Klebemitteln, die sich als Rein-UV-Härtungssysteme eignen und die neuen Strahlenquellen vorteilhaft nutzen.

Der vorliegenden Erfindung liegt somit die Aufgabe zu Grunde, ein neues strahlungshärtbares Klebemittel zur Verfügung zu stellen, das sich insbesondere für die Härtung mit UV-Strahlenquellen eignet, die im Wesentlichen keine IR-Strahlung emittieren.

Überraschenderweise wurde nun gefunden, dass diese Aufgabe durch ein strahlungshärtbares Klebemittel gelöst wird, das
a) wenigstens ein Urethan(meth)acrylat,
b) wenigstens ein N,N-Dialkyl(meth)acrylamid,
c) wenigstens ein Alkyl(meth)acrylat,
d) gegebenenfalls wenigstens ein Hydroxyalkyl(meth)acrylat,
e) wenigstens einen Photoinitiator, ausgewählt unter Acylphosphinoxiden und Acylphosphinoxid-haltigen Gemischen,
enthält.

Im Folgenden werden Verbindungen, die sich von Acrylsäure und Methacrylsäure ableiten können, teilweise verkürzt durch Einfügen der Silbe "(meth)" in die von der Acrylsäure abgeleitete Verbindung bezeichnet.

Vorzugsweise weisen die Urethan(meth)acrylate a) ein gewichtsmittleres Molekulargewicht M_{W} im Bereich von etwa 500 bis 6000, bevorzugt 750 bis 5000 und speziell 1000 bis 2000 auf.

Vorzugsweise ist die Komponente a) ausgewählt unter Urethan(meth)acrylaten, die
a1) wenigstens ein Polyisocyanat mit einer NCO-Funktionalität von mindestens 2, das ausgewählt ist unter aliphatischen und cycloaliphatischen Diisocyanaten, den Isocyanuraten und Biureten davon,
a2) wenigstens ein Polyesterpolyol und
a3) wenigstens ein Hydroxyalkyl(meth)acrylat
eingebaut enthalten.

Vorzugsweise weisen die Isocyanate a1) eine NCO-Funktionalität im Bereich von 2 bis 5 auf. Geeignete Diisocyanate sind beispielsweise Tetramethylendiisocyanat, Hexamethylendiisocyanat, Trimethylhexandiisocyanat, Tetramethylhexandiisocyanat, 1,2-, 1,3- und 1,4-Diisocyanatocyclohexan, 4,4'-Di(isocyanatocyclohexyl)-methan und Isophorondiisocyanat. Geeignete trifunktionale Isocyanatverbindungen sind die Isocyanurate der zuvor genannten Diisocyanate. Geeignete tri- und höherfunktionale Isocyanatverbindungen sind die Biurete der zuvor genannten Diisocyanate. Die zuvor genannten Polyisocyanate können allein oder in Form von Mischungen eingesetzt werden. Vorzugsweise sind die Polyisocyanate a1) ausgewählt unter Hexamethylendiisocyanat, Isophorondiisocyanat, 4,4'-Di(isocyanatocyclohexyl)methan, dem Biuret von Hexamethylendiisocyanat, dem Isocyanurat von Hexamethylendiisocyanat und Mischungen davon.

Geeignete Polyesterpolyole a2) sind lineare und verzweigte Polymere mit endständigen OH-Gruppen, z. B. solche mit mindestens zwei OH-Endgruppen. Die Polyesterpolyole lassen sich in einfacher Weise durch Veresterung von Di-, Tri- und/oder Polycarbonsäuren mit Di-, Tri- und/oder Polyolen herstellen. Bevorzugte Carbonsäuren sind aliphatische Dicarbonsäuren mit 2 bis 10 Kohlenstoffatomen, beispielsweise Malonsäure, Bernsteinsäure, Glutarsäure und Adipinsäure. Geeignete Diole sind z. B. Glykole, bevorzugt Glykole mit 2 bis 10 Kohlenstoffatomen. Beispiele für geeignete Glykole sind z. B. 1,2-Ethandiol, 1,3-Propandiol, 1,4-Butandiol, 1,5-Pentandiol, 1,6-Hexandiol und Gemische davon. Ein geeignetes Polyesterpolyol ist beispielsweise das Polykondensationsprodukt von Ethylenglykol, 1,6-Hexandiol und Adipinsäure.

Geeignete Hydroxyalkyl(meth)acrylate a3) sind beispielsweise 2-Hydroxyethylacrylat, 2-Hydroxyethylmethacrylat, 2-Hydroxypropylacrylat und 2-Hydroxypropylmethacrylat.

Die Herstellung der in den erfindungsgemäßen Klebemitteln eingesetzten Urethan(meth)acrylate kann in bekannter Weise erfolgen. Das molare Verhältnis von NCO-Gruppen der Verbindungen a1) zu OH-Gruppen der Verbindungen a2) und a3) liegt vorzugsweise in einem Bereich von 0,3:1 bis 1,1:1, insbesondere 0,6:1 bis 0,99:1. Die erhaltenen Urethan(meth)acrylate weisen in der Regel keine Isocyanatgruppen mehr auf. Die Reaktionstemperatur liegt üblicherweise in einem Bereich von 0 bis 100 °C. Zur Beschleunigung der Reaktion können übliche Katalysatoren, wie Dibutylzinndilaurat eingesetzt werden.

Die erfindungsgemäßen Klebemittel enthalten die Komponente a) bevorzugt in einer Menge von 15 bis 70 Gew.-%, besonders bevorzugt 20 bis 50 Gew.-%, bezogen auf das Gesamtgewicht des Klebemittels.

Bevorzugte Verbindungen b) sind die Amide der Acrylsäure oder Methacrylsäure mit Dialkylaminen, die vorzugsweise 1 bis 10 Kohlenstoffatome pro Alkylrest aufweisen. Vorzugsweise ist die Komponente b) ausgewählt unter N.N-Dimethylacrylamid, N,N-Dimethylmethacrylamid und Mischungen davon.

Das erfindungsgemäße Klebemittel enthält die Komponente b) vorzugsweise in einer Menge von 1 bis 25 Gew.-%, insbesondere 2 bis 20 Gew.-%, bezogen auf das Gesamtgewicht des Klebemittels.

Geeignete Verbindungen c) sind die Ester der Acrylsäure und Methacrylsäure mit Alkanolen, vorzugsweise C₁-C₂₀-Alkanolen. Dazu zählen beispielsweise Methyl(meth)acrylat, Ethyl(meth)acrylat, n-Propyl(meth)acrylat, etc. Bevorzugte Verbindungen c) sind die Ester der (Meth)acrylsäure mit verzweigten, cyclischen oder polycyclischen Alkoholen. Besonders bevorzugt ist die Komponente c) ausgewählt unter Isobornylacrylat und Isobornylmethacrylat.

Das erfindungsgemäßen Klebemittel enthält die Komponente c) vorzugsweise in einer Menge von 20 bis 65 Gew.-%, insbesondere 30 bis 50 Gew.-%, bezogen auf das Gesamtgewicht des Klebemittels.

Geeignete Verbindungen d) sind die Ester der Acrylsäure und Methacrylsäure mit Diolen, die vorzugsweise 2 bis 10 C-Atome aufweisen. Vorzugsweise sind die Verbindungen c) ausgewählt unter 2-Hydroxyethyl(meth)acrylat, 3-Hydroxypropyl(meth)acrylat, 4-Hydroxybutyl(meth)acrylat und Gemischen davon. Durch den Einsatz von Verbindungen der Komponente d) können die Hafteigenschaften der erfindungsgemäßen Klebemittel gegenüber verschiedenen zu verklebenden Substraten modifiziert werden. Zur Herstellung von Klebeverbindungen zwischen metallischen und nichtmetallischen Substraten ist es vorteilhaft, wenn wenigstens eine Verbindung der Komponente d) der Klebstoffformulierung als Haftvermittler zugesetzt wird.

Das erfindungsgemäße Klebemittel enthält die Komponente d) vorzugsweise in einer Menge von 2 bis 15 Gew.-%, insbesondere 4 bis 13 Gew.-%, bezogen auf das Gesamtgewicht des Klebemittels.

Die erfindungsgemäßen strahlungshärtbaren Klebemittel enthalten eine Photoinitiatorkomponente e), die aus einem Acylphosphinoxid besteht oder ein solches umfasst. Sie eignen sich besonders vorteilhaft für eine Härtung mit UV-Strahlungsquellen, die im Wesentlichen reine UV-Strahlung und keine IR-Strahlung emittieren. Des Weiteren absorbieren sie vorteilhafterweise Strahlung im UV-A-/UV-B-Wellenlängenbereich (etwa 400 bis 280 nm) des eingestrahlten Lichts, so dass auf den Einsatz von gefährlicher UV-C-Strahlung (etwa 280 bis 200 nm) verzichtet werden kann.

Geeignete Acylphosphinoxide sind ausgewählt unter Monoacylphosphinoxiden, wie 2,4,6-Trimethylbenzoyldiphenylphosphinoxid (Lucirin® TPO, BASF Aktiengesellschaft), Diphenyl-(2,4,6-trimethylbenzoyl)-phosphinoxid (Darocure® TPO, Fa. Ciba Spezialitätenchemie AG), (2,6-Dimethoxybenzoyl)-2,4,4-trimethylpentylphosphinoxid; Bisacylphosphinoxiden, z. B. Phenyl-bis(2,4,6-trimethylbenzoyl)-phosphinoxid (Irgacure® 819, Fa. Ciba Spezialitätenchemie AG) und Mischungen davon. Das eingesetzte Photoinitiatorsystem kann gewünschtenfalls wenigstens einen weiteren Photoinitiator enthalten, der insbesondere ausge-einen weiteren Photoinitiator enthalten, der insbesondere ausgewählt ist unter Hydroxycycloalkylphenonen, Benzophenon, Benzophenonderivaten und Mischungen davon. Ein bevorzugtes Hydroxycycloalkylphenon ist Hydroxycyclohexylphenon. Geeignete Benzophenonderivate sind beispielsweise Alkylbenzophenone, wie 4-Methylbenzophenon, 2,4-Dimethylbenzophenon, etc. Ein bevorzugtes Photoinitiatorsystem besteht aus 2,4,6-Trimethylbenzoyldiphenylphosphinoxid, 1-Hydroxycyclohexylphenon und Benzophenon.

Das erfindungsgemäße Klebemittel enthält die Komponente e) vorzugsweise in einer Menge von 1 bis 8 Gew.-%, insbesondere 2 bis 6 Gew.-%, bezogen auf das Gesamtgewicht des Klebemittels.

Ferner können die erfindungsgemäßen strahlungshärtbaren Klebemittel je nach Verwendungszweck bis zu 10 Gew.-%, bezogen auf das Gesamtgewicht des Klebemittels, übliche Hilfsmittel, wie Haftvermittler, Verdicker, Füllstoffe, Farbstoffe, enthalten.

Die erfindungsgemäßen Klebemittel können gewünschtenfalls wenigstens ein inertes (nicht polymerisierbares) Lösungsmittel enthalten. Vorzugsweise sind die erfindungsgemäßen Klebemittel frei von Lösungsmitteln.

Die Formulierung der erfindungsgemäßen Klebemittel erfolgt nach üblichen, dem Fachmann bekannten Verfahren.

Die erfindungsgemäßen Klebemittel können allgemein durch Einwirkung energiereicher Strahlung, beispielsweise UV-Licht- oder Elektronenstrahlung, gehärtet werden. Vorzugsweise erfolgt die Aushärtung mittels UV-Strahlung. Dabei eignen sich die erfindungsgemäßen Klebemittel in besonders vorteilhafter Weise für die Härtung mit UV-Strahlenquellen, die im Wesentlichen reine UV-Strahlung und keine IR-Strahlung emittieren. Derartige Rein-UV-Bestrahlungsvorrichtungen sind prinzipiell bekannt und werden beispielsweise in der DE-A-196 51 977, WO 99/46546 und WO 99/46546 beschrieben, worauf hier Bezug genommen wird.

Kommerziell werden Rein-UV-Bestrahlungsvorrichtungen z. B. von der Fa. arccure technologies vertrieben. Dabei lassen sich bei der Härtung der erfindungsgemäßen Klebemittel mit derartigen UV-Strahlenquellen in der Regel sowohl sehr hohe Härtungsgeschwindigkeiten als auch vorteilhafte Eigenschaften der erhaltenen Klebefilme erzielen. So kann die Bestrahlungszeit, die erforderlich ist, um eine bestimmte Festigkeit der Verklebung zu erzielen, im Allgemeinen um mindestens 50 %, vielfach sogar um mindestens 75 %, verringert werden. Die erhaltenen Verklebungen zeichnen sich im Allgemeinen durch eine hohe Festigkeit sowie eine gute Flexibilität aus. Ein Verspröden der Verklebung wird vorteilhafterweise vermieden.

Die vorliegende Erfindung betrifft auch ein Verfahren zur Herstellung einer Klebeverbindung, bei dem man
i) auf ein erstes Substrat ein Klebemittel, wie zuvor definiert, aufbringt,
ii) im Bereich des Klebemittels ein zweites Substrat mit dem ersten in Kontakt bringt und
iii) das Klebemittel durch Bestrahlung mit UV-Strahlung härtet,
wobei wenigstens eines der Substrate im Bereich des aufgebrachten Klebemittels für UV-Strahlung durchlässig ist.

Die eingesetzten Substrate sind vorzugsweise ausgewählt unter Polymeren, insbesondere Thermoplasten, wie Polyolefinen, Vinylpolymeren (z. B. Polystyrol, Polyvinylchlorid), Polyamiden, Polyestern, Polycarbonaten sowie Metallen, Glas, keramischen Materialien etc. Dabei ist wenigstens eines der Substrate im Bereich des aufgebrachten Klebemittels für UV-Strahlung ausreichend durchlässig, um eine Strahlungshärtung zu ermöglichen.

Das Aufbringen des strahlungshärtbaren Klebemittels auf das erste Substrat in Schritt i) erfolgt in bekannter Weise, z. B. durch Spritzen, Spachteln, Rakeln, Rollen oder Gießen. Das Auftragsvolumen liegt in der Regel in einem Bereich von etwa 0,01 bis 0,3 ml und vorzugsweise 0,03 bis 0,05 ml. Das Aufbringen kann bei Raumtemperatur wie auch bei erhöhter Temperatur, vorzugsweise jedoch nicht oberhalb 50 °C erfolgen. Anschließend wird das zweite Substrat in Schritt ii) im Bereich des Klebemittels mit dem ersten in Kontakt gebracht und durch eine geeignete Vorrichtung während der Bestrahlung im Schritt iii) fixiert. Die Bestrahlung in iii) erfolgt vorzugsweise mit UV-Strahlung der Wellenlänge 200 bis 400 nm, speziell 280 bis 400 nm (UV-A-, UV-B-Strahlung). Als UV-Quellen können Standard-UV-Lampen, beispielsweise Hochdruckquecksilberdampflampen, eingesetzt werden. Vorzugsweise wird zur Härtung eine der zuvor beschriebenen UV-Strahlenquellen eingesetzt, die im Wesentlichen keine IR-Strahlung emittiert. Dazu zählen beispielsweise Rein-UV-Strahler BK 150 der Fa. arccure technologies oder das System acm (advanced cold mirror) der Fa. Dr. Hönle AG. Die zur Härtung eingesetzte Strahlungsdosis liegt vorzugsweise in einem Bereich von 100 bis 1000 mJ/cm².

Die erfindungsgemäßen Klebemittel eignen sich in vorteilhafter Weise zur Herstellung von Klebeverbindungen zwischen Substraten für einen Einsatz in der Medizintechnik und der Elektronikindustrie. Beispielhaft sei das Kleben von Nadeln in Einwegspritzen sowie die Herstellung von Verklebungen im Bereich von Halbleiterelementen, Leiterplatten, elektrische Kontakte, Relais etc. genannt.

Die Erfindung wird anhand der folgenden Beispiele näher erläutert.

Zur Strahlungshärtung mit einer Standard-UV-Lampe wurde ein UVASPOT 2000®-Strahler der Fa. Dr. Hönle AG eingesetzt. Zur Strahlungshärtung mit einem so genannten Rein-UV-System wurde ein Strahler BK 150 der Fa. arccure technologies eingesetzt.

### l. Herstellung der strahlungshärtbaren Klebemittel

### Beispiel 1 (erfindungsgemäß)

Aus 22 Gew.-% eines Urethan(meth)acrylats, 4 Gew.-% Hydroxypropylmethacrylat, 20 Gew.-% N,N-Dimethylacrylamid, 50 Teilen Isobornylacrylat und 4 Teilen eines Photoinitiatorgemischs (2 Gew.-% 2,4,6-Trimethylbenzoyldiphenylphosphinoxid, (Lucirin® TPO der Fa. BASF Aktiengesellschaft) und 2 Gew.-% eines Gemischs aus 1-Hydroxycyclohexylbenzophenon und Benzophenon (Irgacure® 500, Fa. Ciba Spezialitätenchemie AG)) wurde unter intensivem Mischen ein Klebemittel formuliert. Die Klebemittelformulierungen der folgenden Tabelle wurden analog hergestellt.

| Beispiel Nr. | Urethanacrylat [Gew.-%] | IBA¹⁾[Gew.-%] | NNDMA ²⁾ [Gew.-%] | HPMA³⁾ [Gew.-%] | Photoinitiator [Gew.-%] |
|---|---|---|---|---|---|
| 1 | 22 | 50 | 20 | 4 | 2 Lucirin® TPO |
| | | | | | 2 Irgacure® 500 |
| 2 | 45 | 42 | 5 | 2 | 4 Irgacure® 1700⁴⁾ |
| | | | | | 2 Irgacure® 500 |
| 3 | 15 | 65 | 8 | 6 | 4 Irgacure® 819⁵⁾ |
| | | | | | 2 Irgacure® 500 |
| 4 | 32 | 45 | 10 | 10 | 1 Irgacure® 819 |
| | | | | | 2 Irgacure® 500 |
| 5 | 46 | 25 | 12 | 13 | 3 Lucirin® TPO |
| | | | | | 1 Irgacure® 184 ⁶⁾ |
| 6 | 54 | 25 | 4 | 13 | 3 Irgacure® 1700 |
| | | | | | 1 Irgacure® 184 |
| 7 | 26 | 45 | 15 | 10 | 3 Irgacure® 819 |
| | | | | | 1 Irgacure® 184 |
| 8 | 63 | 20 | 8 | 4 | 3 Lucirin® TPO |
| | | | | | 2 Irgacure® 184 |
| 9 | 42 | 48 | 3 | 2 | 3 Lucirin® TPO |
| | | | | | 2 Irgacure® 184 |

| | | | | | |
|---|---|---|---|---|---|
| ¹⁾ Isobornylacrylat | | | | | |
| ²⁾ N,N-Dimethylacrylamid | | | | | |
| ³⁾ Hydroxypropylmethacrylat | | | | | |
| ⁴⁾ Mischung aus (2,6-Dimethoxybenzoyl)-2,4,4-trimethylpentylphosphinoxid und 2-Hydroxy-2-methyl-1-phenylpropan-1-on | | | | | |
| ⁵⁾ Phenyl-bis(2,4,6-trimethylbenzoyl)phosphinoxid | | | | | |
| ⁶⁾ 1-Hydroxycyclohexylbenzophenon | | | | | |

### II. Herstellung von Verklebungen

### Beispiel 10 (erfindungsgemäß)

Eine Edelstahlnadel mit einem Durchmesser von 2 mm wird in eine Polycarbonatkanüle eingeklebt. Dazu wird die Nadel in die Kanüle gefügt und der Klebstoff aus Beispiel 1 anschließend aufgetragen, so dass der Klebstoff sich über Kapillarkräfte in der Verbindung verteilt. Mit dem Rein-UV-System BK 150 wird der Klebstoff innerhalb von 0,2 Sekunden ausgehärtet und eine Auszugskraft von 100 N erzielt.

### Beispiel 11 (Vergleich)

Die gleiche Verklebung wie in Beispiel 10 wird mit einem Strahler, der eine vergleichbare Leistung aufweist, aber zu 70 % IR-Strahlung emittiert (UVASPOT 2000), durchgeführt. Dabei benötigt man 1 Sekunde Bestrahlungszeit, um die gleiche Festigkeit zu erzielen.

## Patentansprüche

1. Strahlungshärtbares Klebemittel, enthaltend
a) wenigstens ein Urethan(meth)acrylat,
b) wenigstens ein N,N-Dialkyl(meth)acrylamid,
c) wenigstens ein Alkyl(meth)acrylat,
d) gegebenenfalls wenigstens ein Hydroxyalkyl(meth)acrylat,
e) wenigstens einen Photoinitiator, ausgewählt unter Acylphosphinoxiden und Acylphosphinoxid-haltigen Gemischen.

2. Klebemittel nach Anspruch 1, wobei die Komponente a) ausgewählt ist unter Urethan(meth)acrylaten, die
a1) wenigstens ein Polyisocyanat mit einer NCO-Funktionalität von mindestens 2, das ausgewählt ist unter aliphatischen und cycloaliphatischen Diisocyanaten, den Isocyanuraten und Biureten davon,
a2) wenigstens ein Polyesterpolyol und
a3) wenigstens ein Hydroxyalkyl(meth)acrylat
eingebaut enthalten.

3. Klebemittel nach einem der vorhergehenden Ansprüche, wobei die Komponente b) ausgewählt ist unter N,N-Dimethylacrylamid und N,N-Dimethylmethacrylamid.

4. Klebemittel nach einem der vorhergehenden Ansprüche, wobei die Komponente c) ausgewählt ist unter Isobornylacrylat und Isobornylmethacrylat.

5. Klebemittel nach einem der vorhergehenden Ansprüche, wobei die Komponente d) ausgewählt ist unter Hydroxyethyl(meth)acrylat, Hydroxypropyl(meth)acrylat und Mischungen davon.

6. Klebemittel nach einem der vorhergehenden Ansprüche, wobei die Komponente e) als Acylphosphinoxid 2,4,6-Trimethyl-benzoyldiphenylphosphinoxid enthält.

7. Klebemittel nach einem der vorhergehenden Ansprüche, wobei die Komponente e) wenigstens ein Acylphosphinoxid und wenigstens einen weiteren Photoinitiator, der ausgewählt ist unter Hydroxycycloalkylphenonen, Benzophenon, Benzophenonderivaten und Mischungen davon, umfasst.

8. Verfahren zur Herstellung einer Klebeverbindung, bei dem man
i) auf ein erstes Substrat ein Klebemittel, wie in einem der Ansprüche 1 bis 7 definiert, aufbringt,
ii) im Bereich des Klebemittels ein zweites Substrat mit dem ersten in Kontakt bringt und
iii) das Klebemittel durch Bestrahlung mit UV-Strahlung härtet,
wobei wenigstens eines der Substrate im Bereich des aufgebrachten Klebemittels für UV-Strahlung durchlässig ist.

9. Verfahren nach Anspruch 8, bei dem zur Härtung eine UV-Strahlenquelle eingesetzt wird, die im Wesentlichen keine IR-Strahlung emittiert.

10. Verwendung eines Klebemittels, wie in einem der Ansprüche 1 bis 7 definiert, in einem Klebeverfahren, bei dem zur Härtung eine UV-Strahlenquelle eingesetzt wird, die im Wesentlichen keine IR-Strahlung emittiert.

11. Verwendung eines Klebemittels, wie in einem der Ansprüche 1 bis 7 definiert, zur Herstellung von Klebeverbindungen zwischen Substraten für einen Einsatz in der Medizintechnik und der Elektronikindustrie.
